**Europäisches Patentamt**

**European Patent Office**

**Office européen des brevets**

(19)

(11) Veröffentlichungsnummer: **0 021 090**
**B1**

(12)

# EUROPÄISCHE PATENTSCHRIFT

(45) Veröffentlichungstag der Patentschrift:
25.05.83

(51) Int. Cl.³: **C 03 B 37/16**

(21) Anmeldenummer: **80102977.8**

(22) Anmeldetag: **28.05.80**

(54) Vorrichtung zum Trennen von mehreren in einem Kabel vereinigten Lichtwellenleitern.

(30) Priorität: **21.06.79 DE 2925070**

(43) Veröffentlichungstag der Anmeldung:
**07.01.81 Patentblatt 81/1**

(45) Bekanntmachung des Hinweises auf die Patenterteilung:
**25.05.83 Patentblatt 83/21**

(84) Benannte Vertragsstaaten:
**AT BE CH FR GB IT LI NL SE**

(56) Entgegenhaltungen:
**FR-A-2 3º9 310**
**US-A-4 017 013**
**IBM TECHNICAL DISCLOSURE BULLETIN, Band 21, No. 10, März 1979 NEW YORK (US) E. O. ÜBERBACHER: »Cutting Tool for Optical Fiber Ribbon Cable« Seiten 41—42—4143**

(73) Patentinhaber: **SIEMENS AKTIENGESELLSCHAFT, Berlin und München Wittelsbacherplatz 2, D-8000 München 2 (DE)**

(72) Erfinder: **Wüstner, Friedrich, Kardinal-Wendel-Strasse 75, D-8190 Wolfratshausen (DE)**

Vorrichtung zum Trennen von mehreren in einem Kabel vereinigten Lichtwellenleitern

Die Erfindung bezieht sich auf eine Vorrichtung zum Trennen von mehreren in einem Kabel vereinigten Lichtwellenleitern, bei dem die Lichtwellenleiter zumindest an der zu trennenden Stelle parallel über einen Amboß geführt und durch eine senkrecht zu den Lichtwellenleitern wirkende Spannvorrichtung axial vorgespannt werden und bei dem anschließend die einzelnen Lichtwellenleiter auf dem Amboß in zu den Lichtwellenleitern senkrecht verlaufender Richtung geritzt werden.

Bei der Herstellung von Kabelverbindungen müssen die Enden der einzelnen Lichtwellenleiter nicht nur in einer gemeinsamen Ebene liegen, sondern die Enden müssen eine optisch ebene Fläche erhalten, die senkrecht zur Längsachse der Lichtwellenleiter steht. Zur Herstellung einer lösbaren Steckverbindung werden dann die Enden der Lichtwellenleiter mit entsprechenden Endstücken versehen. In diesem Zusammenhang ist es bekannt, daß man ein brauchbares Leiterende dann erhält, wenn man den Leiter ritzt und anschließend zieht. Der Leiter bricht dann an der Ritzstelle. Es entsteht aber nur dann eine glatte, saubere und senkrecht zur Leiterachse orientierte Endfläche, wenn ein ganz bestimmter Zug auf den Lichtwellenleiter ausgeübt wird.

Eine Vorrichtung der eingangs beschriebenen Art ist durch IBM Techn. Discl. Bull., Bd. 21, No. 10, März 1979, Seiten 4142—4143, bekanntgeworden. Bei dieser bekannten Vorrichtung werden die über einen Amboß geführten und gemeinsam vorgespannten Lichtwellenleiter durch ein senkrecht gegen den Amboß bewegtes Messer gekerbt, wodurch die unter Spannung stehenden Lichtwellenleiter an der eingekerbten Stelle brechen. Das Spannen der zu beiden Seiten des Ambosses festgeklemmten Lichtwellenleiter erfolgt dadurch, daß der Amboß mit einer definierten Federkraft senkrecht gegen die Lichtwellenleiter gedrückt wird. Damit jeder der Lichtwellenleiter einen gleichen Axialzug erhält, ist der Amboß entsprechend der Zahl der zu trennenden Lichtwellenleiter in einzelne Teilambosse unterteilt, wobei jedem Teilamboß eine Druckfeder zugeordnet ist, die den zugehörigen Teilamboß senkrecht gegen den Lichtwellenleiter drückt. Ferner besteht das Messer zum Einkerben aus einzelnen den Teilambossen zugeordneten Federblättern, die aus einer Blattfeder herausgestanzt sind. Mit dieser bekannten Vorrichtung läßt sich der Durck auf die einzelnen Lichtwellenleiter zur Ausübung einer definierten Axialzugspannung praktisch nicht ändern, sondern bei einer erwünschten Änderung der Axialzugspannung müssen die einzelnen Druckfedern ausgewechselt werden.

Durch die US-A-4 017 013 ist eine Vorrichtung zum Trennen von mehreren Lichtwellenleitern bekanntgeworden, bei der die einzelnen Lichtwellenleiter an der zu trennenden Stelle parallel über einen Amboß geführt und durch eine in Achsrichtung der Lichtwellenleiter wirkenden Spannvorrichtung gespannt und nacheinander geritzt werden. Das Spannen der Lichtwellenleiter erfolgt mit Hilfe einer gegenüber einer feststehenden Klemmvorrichtung verschiebbar angeordneten Klemmvorrichtung, welche unter der Wirkung einer einstellbaren Kraft einer Druckfeder steht.

Damit bei dem nacheinander erfolgenden Ritzen die übrigbleibenden Lichtwellenleiter zumindest beim Schneidvorgang eine definierte Axialzugspannung erhalten, die ja nun entsprechend geringer sein muß wie zuvor, ist die Klemmstelle der verschiebbaren Klemmvorrichtung als Rutschkupplung ausgebildet, wobei die Klemmkraft, welche der Reibungskraft entspricht, einstellbar ist. Dieser bekannten Spannvorrichtung liegt das Prinzip zugrunde, daß mit zunehmender Entfernung der beweglichen Klemmstelle von der feststehenden sich die Verschiebekraft der Druckfeder entsprechend erniedrigt. Die Reibungskraft der Klemmstelle ist so auf die Kraft der Druckfeder abgestimmt, daß beide Kräfte im Gleichgewicht sind. Dieses Gleichgewicht wird nach der Trennung des Lichtwellenleiters gestört, wodurch die Kraft der Druckfeder überwiegt, so daß die verschiebbare Klemmvorrichtung von der feststehenden Klemmvorrichtung so weit wegbewegt wird, bis wieder der Gleichgewichtszustand eingetreten ist. Erst danach wird der nächste Lichtwellenleiter geritzt und gebrochen, worauf eine weitere Verschiebung der Klemmvorrichtung ausgelöst wird. Da sich die Reibungsverhältnisse bei dieser bekannten Vorrichtung ändern können, ist keine Gewähr dafür gegeben, daß sämtliche Lichtwellenleiter auch unter gleichen Bedingungen getrennt werden.

Durch die FR-A-2 399 310 ist ein Verfahren und eine Vorrichtung zum Trennen von mehreren in einem Kabel vereinigten Lichtwellenleitern bekanntgeworden, wobei die Lichtwellenleiter in zwei gegeneinander verschwenkbaren Klemmvorrichtungen festgelegt sind. Die beiden Klemmvorrichtungen stehen über eine Blattfeder oder dergleichen miteinander in Verbindung. Die Lichtwellenleiter werden in gestreckter Stellung an den zu trennenden Stellen eingekerbt, und zwar durch ein senkrecht gegen die Lichtwellenleiter sich bewegendes Messer. Nach dem Kerbvorgang werden die Klemmvorrichtungen gegeneinander so weit verschwenkt, bis die Biegespannung zum Brechen der einzelnen Lichtwellenleiter ausreichend ist.

Schließlich sind durch die FR-A-2 425 651 und die DE-A-2 757 078 von Hand betätigbare Werkzeuge zum Trennen eines einzelnen Lichtwellenleiters bekanntgeworden, bei denen mit Hilfe einer feststehenden und einer beweglichen Klemmvorrichtung die Enden der Lichtwellenleiter festgeklemmt und über einen Amboß vorgespannt werden. Danach wird mit Hilfe eines senkrecht gegen die Lichtwellenleiter bzw. in axialer Richtung derselben beweglichen Schneidplatte die Faser an der zu brechenden Stelle eingekerbt. Bei diesen bekannten Werkzeugen tritt das Problem des gleichzeitigen Schneidens mehrerer Lichtwellenleiter überhaupt nicht auf.

Der Erfindung liegt die Aufgabe zugrunde, eine Vorrichtung der eingangs beschriebenen Art derart weiterzubilden, daß mit relativ einfachen Mitteln die optimalen Bedingungen für das Brechen der Lichtwellenleiter erzielbar sind.

Gemäß der Erfindung wird diese Aufgabe dadurch gelöst, daß die einzelnen Lichtwellenleiter mit Hilfe einer feststehenden und einer beweglichen Klemmvorrichtung gemeinsam über den Amboß vorspannbar sind, daß zur Einstellung einer für jeden Lichtwellenleiter definierten Axialzugspannung zusätzlich eine Druckvorrichtung vorgesehen ist, welche für jeden Lichtwellenleiter jeweils einen einstellbaren Druckbolzen aufweist, der außerhalb der Auflagefläche des Ambosses an dem zugehörigen Lichtwellenleiter angreift, und daß die Lichtwellenleiter nacheinander geritzt werden.

Mit Hilfe der Druckbolzen kann eine genau definierte Axialzugspannung in den Lichtwellenleitern eingestellt werden, so daß sich saubere Endflächen ergeben. Dadurch, daß die einzelnen Lichtwellenleiter nacheinander mit Hilfe einer senkrecht zu den Lichtwellenleitern bewegten Ritzeinrichtung geritzt werden, liegen die einzelnen Endflächen in einer gemeinsamen Verbindungsebene, was bei sämtlichen Verbindungstechniken Voraussetzung für eine gute dämpfungsarme Verbindung ist.

Um den einzelnen Lichtwellenleitern gemeinsam eine definierte Vorspannung zu geben, ist die bewegliche Klemmvorrichtung schwenkbar gelagert und steht über ein Hebelsystem und eine Kraftmeßeinheit mit einem Drehmomentgeber in Verbindung. Zur Erzielung einer genau senkrecht zur Achse der Lichtwellenleiter verlaufenden Schnittebene ist ein Amboß mit zylindrischer Oberseite verwendet, in dem parallel verlaufende Nuten zur Führung der einzelnen Lichtwellenleiter eingearbeitet sind.

Eine einfache definierte Einstellung der Axialzugspannung wird gemäß der Erfindung dadurch erreicht, daß die einzelnen Druckbolzen über je einen Hebel durch Gewichte belastbar sind Ein großer Einstellbereich wird dadurch erreicht, daß die Gewichte auf den Hebeln nach Art einer Dezimalwaage verstellbar sind.

Vorzugsweise besteht die Ritzvorrichtung aus einem senkrecht zu den Lichtwellenleitern beweglichen doppelarmigen Hebel, welcher an einem Ende einen keilförmigen Diamant trägt und dessen anderes Ende unter der Wirkung einer Federkraft steht, so daß der Diamant unter einem vorgebbaren Druck gegen die Lichtwellenleiter gedrückt werden kann. Vorzugsweise trägt der den keilförmigen Diamant tragende Hebelarm einen Abtaststift, welcher mit einer feststehenden Schablone zusammenwirkt. Hierbei ist die Schablone so ausgebildet, daß der keilförmige Diamant beim Entlangführen über den auf dem Amboß aufliegenden Lichtwellenleitern eine sinusförmige Bewegung ausführt. Damit ist man in der Lage, einen in bezug auf den Radius der einzelnen Lichtwellenleiter genau definierten Schnitt auszuführen.

Anhand der Zeichnung, in der im Prinzip ein Ausführungsbeispiel einer Vorrichtung nach der Erfindung dargestellt ist, wird die Erfindung näher erläutert. Es zeigt

Fig. 1 eine Seitenansicht der Vorrichtung im Prinzip und

Fig. 2 eine Seitenansicht der Ritzvorrichtung.

Wie bei der Konfektionierung von Schalt- und Steckkabeln müssen die einzelnen Lichtwellenleiter am Kabelende unter anderem entdrallt, erkannt und in die gewünschten Positionen gebracht werden, um sie mit entsprechenden Lichtwellenleitern eines anderen Kabels od. dgl. verbinden zu können. Meist werden die Kabelenden mit sog. Endstücken versehen, in denen die einzelnen Lichtwellenleiter eine genau definierte Position einnehmen. Wesentlich hierbei ist jedoch, daß die einzelnen Lichtwellenleiter im vorgegebenen Abstand parallel zueinander liegen.

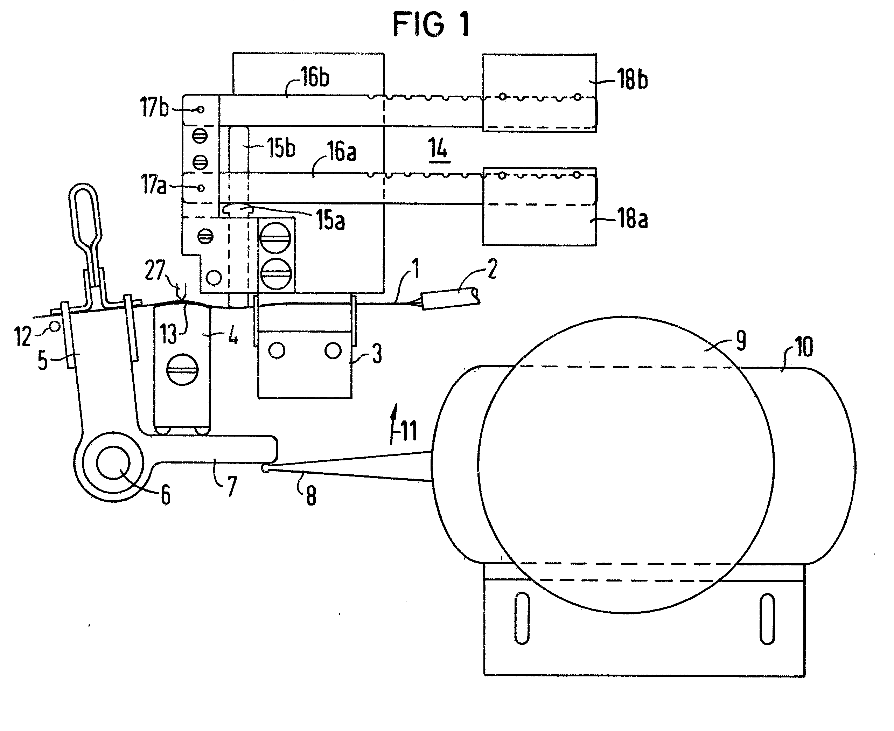

In Fig. 1 ist angenommen, daß die einzelnen Lichtwellenleiter 1 eines Mehrfachkabels 2 in einer zur Zeichnungsebene senkrechten Ebene liegen, so daß praktisch nur ein Lichtwellenleiter sichtbar ist. Mit 3 ist eine Klemmvorrichtung bezeichnet, mit deren Hilfe die einzelnen in einer Ebene liegenden Lichtwellenleiter 1 genau positioniert und parallel angeordnet nebeneinander liegen. Zur Parallelführung der Lichtwellenleiter 1 ist die Klemmvorrichtung 3 vorzugsweise mit parallelen Nuten versehen, vorzugsweise dreieckförmigen, in denen die Lichtwellenleiter 1 festgeklemmt werden. Die Klemmvorrichtung 3 kann bereits einen Teil der Positioniereinrichtung, beispielsweise einen Positionierkamm enthalten. Die Enden der Lichtwellenleiter 1 sind über einen Amboß 4 geführt und sind in einer beweglichen Klemmvorrichtung 5 abermals festgeklemmt. Die Klemmvorrichtung 5 zur Festklemmung der Lichtwellenleiter 1 ist entsprechend der Klemmvorrichtung 3 ausgeführt, nämlich derart, daß die einzelnen Lichtwellenleiter nebeneinander parallel liegen. Die bewegliche Klemmvorrichtung 5 ist um eine Achse 6 schwenkbar und steht über einen Arm 7 mit einem Hebel 8 einer Kraftmeßeinheit 9 in Verbindung, welche einen Drehmomentgeber 10 enthält, mit dem der Hebel 8 in Pfeilrichtung 11 verschwenkt werden kann, wodurch die Klemmeinrichtung 5 eine Bewegung entgegen dem Uhrzeigersinn ausführt und damit den festgeklemmten Lichtwellenleitern 1 eine definierte Vorspannung erteilt werden kann, die anhand der Kraftmeßeinheit 9 einstellbar ist. Mit 12 ist ein Anschlag bezeichnet, mit dem die Schwenkbewegung der beweglichen Klemmvorrichtung 5 begrenzt werden kann.

Der Amboß 4 weist eine zylindrische Oberseite 13 auf, in die gleichlaufend mit dem Radius mehrere Rechtecknuten 20 für die Aufnahme der Lichtwellenleiter 1 eingearbeitet sind. Rechts und links vom Nutengrund ausgehend ist ein kleiner Radius angefräst, damit der Lichtwellenleiter knickfrei ablaufen kann.

Mit 14 ist eine Spannvorrichtung bezeichnet, die für jeden Lichtwellenleiter 1 einen Druckbolzen 15a, 15b . . . enthält, mit denen ein senkrechter Druck auf jeden der Lichtwellenleiter 1 ausgeübt werden kann. Dieser Druck ruft in den einzelnen Lichtwellenleitern 1 eine Axialzugspannung hervor. Zur Einstellung einer definierten Axialzugspannung sind die Druckbolzen 15a, 15b . . . mit Hebeln 16a, 16b . . . versehen, welche an Punkten 17a, 17b . . . angelenkt sind und welche mit Hilfe von Gewichten 18a, 18b . . . belastbar sind. Durch eine entsprechende Nutung sind die Gewichte 18a, 18b . . . auf den Hebeln 16a, 16b . . . verstellbar.

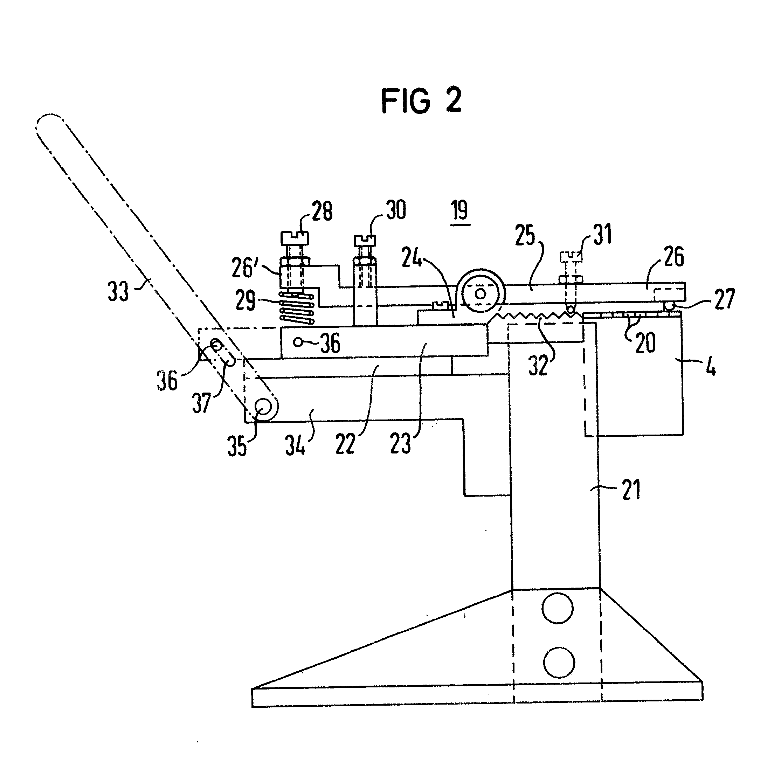

In Fig. 2 ist die Ritzvorrichtung 19 dargestellt, wobei von der Vorrichtung nach Fig. 1 lediglich der Amboß 4 dargestellt ist, in dessen Rechtecknuten 20 die einzelnen Lichtwellenleiter parallel zueinander geführt sind. Auf einem Unterteil 21 der Ritzvorrichtung ist auf einer Parallelführung 22 ein verschiebbares Teil 23 angeordnet, das einen Lagerbock 24 für einen doppelarmigen Hebel 25 trägt. Das eine Ende 26 des doppelarmigen Hebels 25 trägt einen keilförmigen Diamant 27. Das andere Ende 26′ des doppelarmigen Hebels 25 ist mit einer mit Hilfe einer Schraube 28 einstellbaren Feder 29 versehen, welche versucht, den doppelarmigen Hebel 25 im Uhrzeigersinn zu verschwenken. Diese Schwenkbewegung kann mit Hilfe einer Anschlagschraube 30 begrenzt werden. Ferner ist der doppelarmige Hebel 25 mit einem Abtaststift in Form einer Schraube 31 versehen, die mit einer feststehenden Schablone 32 zusammenzuwirken in der Lage ist. Die Schablone 32 besteht aus aneinandergereihten Zacken, deren Anzahl und Abstand dem Abstand der Nuten 20 im Amboß 4 entspricht.

Mit Hilfe eines Handhebels 33, welcher an einem Teil 34 bei 35 angelenkt ist, kann der verschiebbare Teil 23 in die gestrichelte Stellung verschoben werden. Zu diesem Zweck ist mit dem Teil 23 ein Führungsstift 36 verbunden, der in einem Langloch 37 zu gleiten in der Lage ist. Wird der Handhebel 33 in die dargestellte gestrichelte Stellung bewegt, so führt der Diamant 27 beim Entlangführen über die Lichtwellenleiter durch das Zusammenwirken vom Abtaststift 31 und Schablone 32 eine annähernd sinusförmige Bewegung aus. Hierbei ritzt der Diamant mit einer messerschnittähnlichen Bewegung jeden einzelnen unter Zugspannung stehenden Lichtwellenleiter. Unmittelbar nach dem Ritzen erfolgt die Trennung.

Die erfindungsgemäße Vorrichtung arbeitet wie folgt: Die mit Hilfe der Klemmvorrichtung 3 festgeklemmten Leiter werden über den Amboß 4 mit Hilfe der beweglichen Klemmvorrichtung 5 vorgespannt werden, dann wird mit Hilfe der Druckbolzen 15a, 15b . . . ein senkrechter Druck genau definierter Größe auf die einzelnen Lichtwellenleiter 1 ausgeübt, wobei unter Umständen die Klemmvorrichtung 5 im Uhrzeigersinn verschwenkt werden kann. Dies ergibt eine genau definierte Zugspannung in den einzelnen Lichtwellenleitern 1. Anschließend wird der keilförmige Diamant 27 mit Hilfe des Hebels 33 über die einzelnen Lichtwellenleiter genau in der Mitte des Ambosses 4, wie in Fig. 1 dargestellt ist, entlanggeführt und somit die einzelnen Lichtwellenleiter 1 nacheinander geritzt. Sind sämtliche Lichtwellenleiter 1 geritzt, so wird die schwenkbare Klemmvorrichtung 5 gegen den Anschlag 12 geführt.

Die mit Hilfe der Kraftmeßeinheit 9 einstellbare Vorspannung der einzelnen Lichtwellenleiter mit Hilfe der schwenkbaren Klemmvorrichtung 5 hängt ab von der Anzahl und der Stärke der einzelnen Lichtwellenleiter 1. Durch die Schablonenführung 31, 32 des doppelarmigen Hebels 25 kann bei Nichtvorhandensein eines Lichtwellenleiters eine Beschädigung des keilförmigen Diamanten 27 nicht eintreten. Mit Hilfe der erfindungsgemäßen Vorrichtung können also im Bedarfsfalle mehr oder weniger Lichtwellenleiter getrennt werden. Selbstverständlich ist es möglich auch nur einen einzelnen Lichtwellenleiter damit zu trennen. Wesentlich bei der erfindungsgemäßen Vorrichtung ist, daß mit Hilfe der Spannvorrichtung 14 für jeden einzelnen Lichtwellenleiter eine genau definierte Zugspannung vorgebbar ist, so daß das Trennen der Lichtwellenleiter unter stets gleichbleibenden Bedingungen vonstatten gehen kann.

**Patentansprüche**

1. Vorrichtung zum Trennen von mehreren in einem Kabel (2) vereinigten Lichtwellenleitern (1), bei dem die Lichtwellenleiter (1) zumindest an der zu trennenden Stelle parallel über einen Amboß (4) geführt und durch eine senkrecht zu den Lichtwellenleitern (1) wirkende Spannvorrichtung axial vorgespannt werden und bei dem anschließend die einzelnen Lichtwellenleiter (1) auf dem Amboß (4) in zu den Lichtwellenleitern (1) senkrecht verlaufender Richtung geritzt werden, dadurch gekennzeichnet, daß die einzelnen Lichtwellenleiter (1) mit Hilfe einer feststehenden und einer beweglichen Klemmvorrichtung (3 bzw. 5) gemeinsam über den Amboß (4) vorspannbar sind, daß zur Einstellung einer für jeden Lichtwellenleiter (1) definierten Axialzugspannung zusätzlich eine Druckvorrichtung (14) vorgesehen ist, welche für jeden Lichtwellenleiter (1) jeweils einen einstellbaren Druckbolzen (15a, 15b . . .) aufweist, der außerhalb der Auflagefläche des Ambosses (4) an dem zugehörigen Lichtwellenleiter (1) angreift, und daß die Lichtwellenleiter (1) nacheinander geritzt werden.

2. Vorrichtung nach Anspruch 1, dadurch gekennzeichnet, daß die bewegliche Klemmvorrichtung (5) schwenkbar gelagert ist und über ein Hebelsystem (7, 8) und eine Kraftmeßeinheit (9) zur Axialvorspannungsvorgabe mit einem Drehmomentgeber (10) in Verbindung steht.

3. Vorrichtung nach Anspruch 1 oder 2, dadurch gekennzeichnet, daß ein Amboß (4) mit zylindrischer Oberseite (13) verwendet ist, in dem parallel verlaufende Nuten (20) zur Führung der einzelnen Lichtwellenleiter (1) eingearbeitet sind.

4. Vorrichtung nach Anspruch 3, dadurch gekennzeichnet, daß die einzelnen Nuten (20) im Amboß (4) rechteckförmiges Profil aufweisen.

5. Vorrichtung nach Anspruch 3 oder 4, dadurch gekennzeichnet, daß zum knickfreien Ablaufen der einzelnen Lichtwellenleiter (1) rechts und links vom Nutengrund ausgehend ein kleiner Radius angefräst ist.

6. Vorrichtung nach einem der Ansprüche 1 bis 5, dadurch gekennzeichnet, daß die einzelnen Druckbolzen (15a, 15b . . .) der Spannvorrichtung (14) über je einen Hebel (16a, 16b . . .) durch Gewichte (18a, 18b . . .) belastbar sind.

7. Vorrichtung nach Anspruch 6, dadurch gekennzeichnet, daß die Gewichte (18a, 18b . . .) auf den Hebeln (16a, 16b . . .) verstellbar sind.

8. Vorrichtung nach einem der Ansprüche 1 bis 7, dadurch gekennzeichnet, daß die Ritzvorrichtung (19) einen senkrecht zu den Lichtwellenleitern (1) beweglichen doppelarmigen Hebel (25) enthält, welcher an einem Ende (26) einen keilförmigen Diamant (27) trägt und dessen anderes Ende (26′) unter der Wirkung einer einstellbaren Kraft einer Feder (29) steht, die den doppelarmigen Hebel (25) gegen die auf dem Amboß (4) aufliegenden Lichtwellenleiter (1) zu verschwenken versucht.

9. Vorrichtung nach Anspruch 8, dadurch gekennzeichnet, daß der den keilförmigen Diamant (27) tragende Hebelarm (26) einen Abtaststift (31) trägt, welcher mit einer feststehenden Schablone (32) zusammenwirkt.

10. Vorrichtung nach Anspruch 9, dadurch gekennzeichnet, daß die Schablone (32) so ausgebildet ist, daß der keilförmige Diamant (27) beim Entlangführen über den auf dem Amboß (4) aufliegenden Lichtwellenleiter (1) eine annähernd sinusförmige Bewegung ausführt.

**Claims**

1. Apparatus for severing a plurality of light waveguides which are combined in a cable, in which the light waveguides, at least at the point of severance, are led parallel across an anvil and are axially prestressed by a tensioning device which acts at right angles to the light waveguides, (comparable to the axial tension produced by stretching a string across a bridge of a violin) the individual light waveguides on the anvil subsequently being scratched in the direction running at right angles to the light waveguides, characterized in that the individual light waveguides (1) can be prestressed in common over the anvil (4) with the aid of a stationary and a movable clamping device (3 and 5); that in order to set a defined axial tensile stress, for each light waveguide (1), there is additionally provided a pressure device (14) which has a respective adjustable thrust bolt (15a, 15b . . .) for each light waveguide (1), each of which thrust bolts acts on the light waveguide (1) assigned thereto outside the contact surface of the anvil (4); and that the light waveguides (1) are scratched one after the other.

2. Apparatus according to claim 1, characterized in that the movable clamping device (5) is pivotably mounted and is connected to a rotational movement generator (10) by means of a lever system (7, 8) and a force measuring unit (9), to set the initial axial prestressing.

3. Apparatus according to claim 1 or claim 2, characterized in that there is used an anvil (4) having a cylindrical upper face (13) in which parallel-running grooves (20) are worked, in order to guide the individual light waveguides (1).

4. Apparatus according to claim 3, characterized in that the individual grooves (20) in the anvil (4) have a rectangular cross-section.

5. Apparatus according to claim 3 or claim 4, characterized in that, in order to ensure that the individual light waveguides (1) run without kinking, a small radius is milled on the right and left-hand sides of the base of the groove.

6. Apparatus according to one of claims 1 to 5, characterized in that the individual thrust bolts (15a, 15b . . .) of the tensioning device (14) can be loaded by means of weights (18a, 18b . . .) via a respective lever (16a, 16b . . .).

7. Apparatus according to claim 6, characterized in that the weights (18a, 18b . . .) can be adjusted on the levers (16a, 16b . . .).

8. Apparatus according to one of claims 1 to 7, characterized in that the scratching device (19) includes a two-armed lever (25) which can be moved at right angles to the light waveguides (1) and which carries a wedge-shaped diamond (27) at one end (26) and the other end (26′) of which is subjected to the effect of the adjustable force of a spring (29) which urges the two-armed lever (25) against the light waveguides (1) which rest on the anvil (4).

9. Apparatus according to claim 8, characterized in that the lever arm (26) which carries the wedge-shaped diamond (27), carries a sensing pin (31) which co-operates with a stationary template (32).

10. Apparatus according to claim 9, characterized in that the template (32) is so shaped that the wedge-shaped diamond (27) carries out an approximately sinusoidal movement when passing across the light waveguide (1) resting on the anvil (4).

**Revendications**

1. Dispositif pour séparer plusieurs guides d'ondes lumineuses réunis en un câble, les guides d'ondes lumineuses étant guidés, au moins au point de séparation, parallèlement à une enclume, et recevant, à l'aide d'un dispositif tendeur agissant perpendiculairement au guide d'ondes lumineuses, une tension préalable axiale, comparable à la tension axiale qui est produite par la tension d'une corde sur un chevalet de violon, les différents guides d'ondes lumineuses, recevant ensuite sur l'enclume une rainure s'étendant perpendiculairement au guide d'ondes lumineuses, caractérisé par le fait que les différents guides d'ondes lumineuses (1) sont susceptibles de recevoir en commun une tension préalable sur l'enclume (4) à l'aide d'un dispositif de serrage fixe et d'un dispositif de serrage mobile (3, 5), qu'il est prévu, en plus, pour régler une tension de traction axiale déterminée pour chaque guide d'ondes lumineuses (1), un dispositif de pression (14) qui comporte pour chaque guide d'ondes lumineuses un poussoir réglable (15a, 15b, ...) qui attaque le guide d'ondes lumineuses associé (1) en dehors de la surface d'appui, et que les guides d'ondes lumineuses (1) sont rainurés successivement.

2. Dispositif selon la revendication 1, caractérisé par le fait que le dispositif de serrage mobile (5) est monté de façon à pouvoir basculer et qu'il est en liaison, par l'intermédiaire d'un système à leviers (7, 8) et d'une unité de mesure de la force (9), pour donner à l'avance la tension préalable axiale, avec un générateur de couple (10).

3. Dispositif selon la revendication 1 ou 2, caractérisé par le fait que l'on utilise une enclume (4) à face supérieure cylindrique (13), et dans laquelle sont réalisées des gorges parallèles (20) servant au guidage des différents guides d'ondes lumineuses (1).

4. Dispositif selon la revendication 3, caractérisé par le fait que les gorges individuelles (20) dans l'enclume (4) présentent un profil rectangulaire.

5. Dispositif selon la revendication 3 ou 4, caractérisé par le fait que pour le passage, sans coude, des différents guides d'ondes lumineuses (1), on a fraisé un petit rayon qui prend naissance à droite et à gauche du fond de la gorge.

6. Dispositif selon l'une des revendications 1 à 5, caractérisé par le fait que les différents poussoirs (15a, 15b...) du dispositif tendeur (14) sont respectivement susceptibles d'être chargés, par l'intermédiaire d'un levier (16a, 16b...), d'un poids (18a, 18b...).

7. Dispositif selon la revendication 6, caractérisé par le fait que les poids (18a, 18b...) sont déplaçables sur les leviers (16a, 16b...).

8. Dispositif selon l'une des revendications 1 à 7, caractérisé par le fait que le dispositif de rainurage (19) comporte un levier à deux bras (25) mobile perpendiculairement par rapport au guide d'ondes lumineuses (1), levier qui porte à une extrémité (26) un diamant cunéiforme (27) et dont l'autre extrémité (16') est soumise à l'action de la force réglable d'un ressort (29) qui tend à faire basculer le levier à deux bras (25) contre les guides d'ondes lumineuses (1) qui reposent l'enclume (4).

9. Dispositif selon la revendication 8, caractérisé par le fait que le bras de levier (26) qui porte le diamant cunéiforme (27), porte une cheville de palpage (31) qui coagit avec un gabarit fixe (32).

10. Dispositif selon la revendication 9, caractérisé par le fait que le gabarit (32) est réalisé de telle façon que le diamant cunéiforme (27) exécute un mouvement à peu près de forme sinusoïdale lorsqu'il est déplace sur les guides d'ondes lumineuses qui reposent sur l'enclume (4).

# FIG 1

0 021 090

# FIG 2